# EUROPÄISCHE PATENTSCHRIFT

(11) **EP 2 872 280 B1**
(45) Veröffentlichungstag und Bekanntmachung des Hinweises auf die Patenterteilung: **10.08.2016**
(21) Anmeldenummer: 13729930.1
(22) Anmeldetag: 07.06.2013
(51) Int. Cl.: B23K 1/00, B23K 1/19, C04B 37/00, G01L 9/00

(54) **BAUGRUPPE MIT MINDESTENS ZWEI MITEINANDER GEFÜGTEN KERAMIKKÖRPERN, INSBESONDERE DRUCKMESSZELLE ; VERFAHREN ZUM HERSTELLEN EINER SOLCHEN BAUGRUPPE**
ASSEMBLY COMPRISING AT LEAST TWO JOINED CERAMIC BODIES, IN PARTICULAR PRESSURE MEASURING CELL ; METHOD OF MANUFACTURING SUCH AN ASSEMBLY
ENSEMBLE DOTÉ D'AU MOINS DEUX CORPS CÉRAMIQUE ASSEMBLÉS, NOTAMMENT UNE CELLULE DE MESURE DE PRESSION ; PROCÉDÉ DE FABRICATION D'UN TEL EMSEMBLE

(30) Priorität: 11.07.2012 DE 102012013663; 24.10.2012 DE 102012110152
(43) Veröffentlichungstag der Anmeldung: 20.05.2015
(73) Patentinhaber: Endress+Hauser GmbH+Co. KG, 79689 Maulburg (DE)
(72) Erfinder: PONATH, Nils, 79539 Lörrach (DE); ROßBERG, Andreas, 79713 Bad Säckingen (DE); SCHMIDT, Elke, 79713 Bad Säckingen (DE)
(74) Vertreter: Andres, Angelika Maria
(86) Internationale Anmeldenummer: PCT/EP2013/061812
(87) Internationale Veröffentlichungsnummer: WO 2014/009071

(56) Entgegenhaltungen:
- WO-A1-2012/123199
- DE-A1-102010 043 119
- US-A- 5 372 298
- US-A- 6 106 960
- US-A1- 2011 211 987

## Beschreibung

Die vorliegende Erfindung betrifft eine Baugruppe, gemäß dem Oberbegriff des Anspruchs 1 (siehe, z.B., US 5 372 298 A) insbesondere eine Druckmesszelle (siehe Anspruch 11) sowie ein Verfahren zum Herstellen einer solchen Baugruppe (siehe Anspruch 12).

Aufgrund der besonderen Relevanz der Erfindung für Druckmesszellen wird die Problemstellung der Erfindung zunächst anhand von Druckmesszellen erläutert.

Druckmesszellen nach dem Stand der Technik weisen eine keramische Messmembran und einen keramischen Gegenkörper auf, wobei die Messmembran mit dem Gegenkörper entlang einer umlaufenden Fügestelle, welche ein Aktivhartlot aufweist, druckdicht verbunden ist, wobei zwischen der Messmembran und dem Gegenkörper eine Druckkammer gebildet ist, wobei sich die Gleichgewichtslage der Messmembran aus der Differenz zwischen einem in der Druckkammer herrschenden Druck und einem auf die der Druckkammer abgewandten Außenseite der Messmembran einwirkenden Druck ergibt.

Als Material für den Gegenkörper und die Messmembran sind insbesondere Aluminiumoxidkeramiken im Einsatz, welche sich aufgrund ihrer elastischen Eigenschaften und ihrer Medienbeständigkeit zur Herstellung von Druckmesszellen eignen. Die genannten Keramikkomponenten werden insbesondere mit einem Aktivhartlot gefügt, welches bevorzugt ein Zr-Ni-Ti-haltiges Aktivhartlot ist. Die Herstellung eines solchen Aktivhartlots ist beispielsweise in der europäischen Offenlegungsschrift EP 0 490 807 A2 offenbart. Nach dem in der Offenlegungsschrift beschriebenen Verfahren lassen sich insbesondere Ringe aus dem Aktivhartlotmaterial herstellen, welche zwischen Messmembran und Gegenkörper zu positionieren sind, um diese miteinander zu verlöten.

Zum Fügen der Bauteile werden beispielsweise die Keramikkörper mit einem zwischenliegenden Lotformteil im Hochvakuum auf eine Temperatur erwärmt, welche das Aufschmelzen des Aktivhartlots ermöglicht, so dass eine Reaktion zwischen dem Aktivhartlot und den Keramikkörpern einsetzt. Durch Abkühlen erstarrt das Aktivhartlot, und die Reaktion zwischen dem Aktivhartlot und dem Keramikkörper wird gestoppt. Beim Abkühlen können jedoch aus der Schmelze des Aktivhartlots Domänen verschiedener Phasen auskristallisieren, wobei die Phasen unterschiedliche thermomechanische Eigenschaften, beispielsweise Ausdehnungskoeffizienten, aufweisen, so dass in dem Gefüge erhebliche mechanische Spannungskonzentrationen an den Korngrenzen zwischen den verschiedenen Phasen auftreten können. Dies kann einerseits die Festigkeit der Fügestelle beeinträchtigen und andererseits aufgrund von plastischen Verformungen im Gefüge zu Hysterese bei der Messung führen. Dies ist insoweit misslich, als das Aktivhartlot vor dem Löten als hinreichend homogenes, nämlich amorphes bzw. feinkristallines Material vorliegt, welches frei von derartigen Problemen ist.

Es ist daher die Aufgabe der Erfindung, eine Baugruppe und eine Druckmesszelle bereitzustellen, sowie ein Herstellungsverfahren dafür bereitzustellen, wodurch die genannten Nachteile des Stands der Technik überwunden werden.

Die Aufgabe wird erfindungsgemäß gelöst durch die Baugruppe gemäß dem Patentanspruch 1, die Druckmesszelle gemäß dem Patentanspruch 11 und das Verfahren gemäß dem Patentanspruch 12.

Eine erfindungsgemäße Baugruppe ist im Anspruch 1 definiert, und umfasst einen ersten Keramikkörper und einen zweiten Keramikkörper, wobei der erste Keramikkörper und der zweite Keramikkörper mittels einer Fügestelle verbunden sind, wobei die Fügestelle ein Aktivhartlot aufweist, wobei das Aktivhartlot ein zusammenhängendes Kernvolumen aufweist, das von dem ersten Keramikkörper und von dem zweiten Keramikkörper jeweils mindestens 1 µm, insbesondere mindestens 2 µm beabstandet ist, wobei die Fügestelle eine erste Grenzschicht und eine zweite Grenzschicht aufweist, die an den ersten Keramikkörper bzw. zweiten Keramikkörper grenzen, wobei das Kernvolumen erfindungsgemäß mindestens 50% des Volumens der Fügestelle umfasst und frei von kristallinen Phasen mit einer Größe von mehr als 6 µm, insbesondere von mehr als 4 µm, vorzugsweise von mehr als 2 µm ist.

Gemäß der Erfindung weist die mindestens eine Grenzschicht eine Stärke von nicht mehr als 3 µm, insbesondere nicht mehr als 2µm und bevorzugt nicht mehr als 1 µm auf.

In einer Weiterbildung der Erfindung ist die Fügestelle ringförmig ausgebildet, wobei das Kernvolumen durch einen Rotationskörper definiert ist, der durch Rotation eines konvexen Polygons, insbesondere Rechtecks, um die Hauptrotationsachse des Rings gebildet ist.

In einer Weiterbildung der Erfindung steigt die Liquidustemperatur von T_{I}(C_{G}) zur Liquidustemperatur T_{I}(C_{K}) monoton mit der Veränderung der Komposition von C_{G} zu C_{K} an.

In einer Weiterbildung der Erfindung weist die Komposition C_{G} eine Liquidustemperatur T_{I}(C_{G}) auf, die nicht mehr als 300 K, vorzugsweise nicht mehr als 150 K, und bevorzugt nicht mehr als 50 K oberhalb der Liquidustemperatur T_{I}(Cₑ) des eutektischen Punktes bzw. des nächsten Schnittpunks mit einer eutektischen Rinne mit einer Komposition Cₑ im Kompositionsraum liegt, wobei Cₑ := (Cₑ₁, ... ,C_{eN}), wobei |Cₑ| = 1, und wobei die Cₑᵢ der stöchiometrische Anteil der Komponenten Kᵢ mit i = 1, ..., N am eutektischen Punkt bzw. ein nächster Schnittpunkt mit einer eutektischen Rinne ist.

In einer Weiterbildung der Erfindung weist die Legierung der Fügestelle am eutektischen Punkt bzw. am nächsten Schnittpunkt mit einer eutektischen Rinne im Kompositionsraum eine Komposition Cₑ auf, wobei Cₑ := (Cₑ₁, ... ,C_{eN}), wobei |Cₑ| = 1, wobei die Cₑᵢ die stöchiometrischen Anteile der Komponenten Kᵢ mit i = 1, ..., N am eutektischen Punkt bzw. am nächsten Schnittpunkt mit einer eutektischen Rinne sind, wobei die Differenz zwischen der Komposition Cₑ und der Komposition C_{G} mit einem normierten Differenzvektor D_{eG} beschreibbar ist, wobei gilt: Cₑ = C_{G} + a_{eG} * D_{eG}, mit |D_{eG}|=1, wobei die Differenz zwischen der Komposition C_{K} und der Komposition C_{G} mit einem normierten Differenzvektor D_{KG} beschreibbar ist, wobei gilt: C_{K} = C_{G} ⁺ a_{KG} * D_{KG}, mit |D_{KG}|=1, wobei a_{eG} und a_{KG} positive Skalare sind, wobei für das Skalarprodukt s_{eK} : = D_{eG} · DKG gilt: sₑₖ < 0, insbesondere s_{eK} < -0,5, bevorzugt s_{eK} < - 0,8.

In einer Weiterbildung der Erfindung weist die Komposition C_{K} des Kernvolumens Metalle auf, welche auch die Komposition C_{G} der Grenzschicht enthält.

Gemäß der Erfindung weisen der erste Keramikkörper und / oder der zweite Keramikkörper Al₂O₃ auf.

Gemäß der Erfindung weist das Aktivhartlot Zr, Ni und Ti auf.

In einer Weiterbildung der Erfindung enthält die Komposition C_{K} im wesentlichen Zirkonium und Nickel, insbesondere in einem stöchiometrischen Verhältnis von etwa 3 zu 1, wobei der Zirkoniumanteil beispielsweise 76 Atom-% und der Nickelanteil beispielsweise 24 Atom-% beträgt.

In einer Weiterbildung der Erfindung weist die Grenzschicht eine Komposition C_{G} auf, die etwa 42 bis 52 Atom-% Zr, 23 bis 28 Atom-% Ni und 24 bis 30 Atom-% Ti, insbesondere 47 Atom-% Zr, 26 Atom-% Ni und 27 Atom-% Ti aufweist, wobei ggf. Al eindiffundiert ist, wobei in dem Maße, wie Al vorliegt, insbesondere der Titananteil gegenüber den obigen Mengenangaben für Ti reduziert ist.

In einer Weiterbildung der Erfindung weisen beide Grenzschichten der Fügestelle die Komposition C_{G} auf.

Die erfindungsgemäße Druckmesszelle umfasst eine erfindungsgemäße Baugruppe, wobei der erste Keramikkörper einen Membrankörper einer Messmembran der Druckmesszelle bildet, wobei der zweite Keramikkörper einen Gegenkörper der Druckmesszelle bildet, und wobei der Gegenkörper und der Messmembran mittels der Fügestelle, welche ringförmig ausgebildet ist, druckdicht miteinander gefügt sind.

Das erfindungsgemäße Verfahren zum Herstellen einer erfindungsgemäßen Baugruppe, welche Baugruppe einen ersten Keramikkörper und einen zweiten Keramikkörper aufweist, wobei der erste Keramikkörper und der zweite Keramikkörper mittels eines Aktivhartlots durch das Verfahren zu verbinden sind, weist die folgenden Schritte auf:
Bereitstellen des Aktivhartlots zwischen den Keramikkörpern, wobei das Aktivhartlot gemittelt über ein zusammenhängendes Kernvolumen eine mittlere Komposition C_{K0} mit einer Liquidustemperatur T_{I}(C_{K0}) aufweist, wobei C_{K0} := (C_{K01}, ... ,C_{K0N}), wobei |C_{K0}| = 1, und wobei die C_{Ki} die stöchiometrischen Anteile der Komponenten Kᵢ i = 1, ..., N der mittleren Komposition des Aktivhartlots im Kernvolumen sind, wobei das Aktivhartlot auf zumindest einer der Oberflächen, die dem Keramikkörper zugewandt sind, eine Grenzschicht mit einer mittleren Komposition C_{G0} aufweist, wobei die Komposition C_{G0} eine Liquidustemperatur T_{I}(C_{G0}) aufweist, die nicht weniger als 20 K, vorzugsweise nicht weniger als 40 K, und besonders bevorzugt nicht weniger als 80 K unter der Liquidustemperatur T_{I}(C_{H0}) der mittleren Komposition C_{K0} des Hauptvolumens liegt,
wobei C_{G0} := (C_{G01}, ... ,C_{G0N}), wobei |C_{G0}| = 1, und wobei die C_{G0i} die stöchiometrischen Anteile der Komponenten Kᵢ i = 1, ..., N der mittleren Komposition des Aktivhartlots in der Grenzschicht sind; und
Erhitzen der Keramikkörper und des Aktivhartlots in einem Vakuumlötprozess, bis zum Schmelzen der Komposition C_{G0}, wobei die Schmelze der Grenzschicht sich im Übergang zum Kernbereich mit dem Material der Grenzschicht vermischt, wodurch die Liquidustemperatur der Grenzschicht erhöht wird, so dass die Grenzschicht zumindest teilweise isotherm erstarrt oder höherviskos wird.

In einer Weiterbildung des Verfahrens umfasst das Bereitstellen des Aktivhartlots, dass ein Lotformteil, welches die Komposition C_{K0} aufweist, mittels Gasphasenabscheidung, beispielsweise durch Sputtern, mindestens auf einer Oberfläche, vorzugsweise auf zwei gegenüberliegenden Oberflächen mit einer Grenzschicht beschichtet wird, welche die Komposition C_{G0} aufweist.

In einer Weiterbildung des Verfahrens umfasst das Bereitstellen des Aktivhartlots, dass mindestens ein Oberflächenabschnitt eines Keramikkörpers, insbesondere zwei gegenüberliegenden Oberflächenabschnitte der beiden Keramikkörper mit jeweils einer Grenzschicht beschichtet wird bzw. werden, welche die Komposition C_{G0} aufweist, wobei die Beschichtung beispielsweise durch Gasphasenabscheidung, insbesondere Sputtern, erfolgt. In einer Ausgestaltung dieser Weiterbildung des Verfahrens wird zwischen den mit der Grenzschicht versehenen Keramikkörpern ein Lotformteil angeordnet, welches ein Kernvolumen mit der Komposition C_{K0} aufweist, und welches ggf. mit einer Grenzschicht der Komposition C_{G0} beschichtet ist.

In einer Weiterbildung des Verfahrens weist die Komposition C_{K0} Zr und Ni in einem stöchiometrischen Verhältnis von 3 zu 1 auf, beispielsweise von etwa 20 Atom-% bis 30 Atom-% Ni und den Rest Zr, insbesondere etwa 22 Atom-% bis 26 Atom-% Ni, bevorzugt 24 Atom-% Ni.

In einer Weiterbildung des Verfahrens weist die Komposition C_{G0} etwa 42 bis 52 Atom-% Zr, 23 bis 28 Atom-% Ni und 24 bis 30 Atom-% Ti auf, beispielsweise 45 bis 49 Atom-% Zr, 24,5 bis 27 Atom-% Ni und 26 bis 29,5 Atom-% Ti, und vorzugsweise 47 Atom-% Zr, 26 Atom-% Ni und 27 Atom-% Ti.

Die Erfindung wird nun anhand des in den Zeichnungen dargestellten Ausführungsbeispiels erläutert.

Gupta, K. P.: The Ni-Ti-Zr system (Nickel-Titanium-Zirconium). Journal of Phase Equilibria, 20(4):441-448, Aug 1999.
- Fig. 1:: Ein vereinfachtes Diagramm für das ternäre System Ni-Ti-Zr;
- Fig. 2:: einen Längsschnitt durch eine erfindungsgemäße Druckmesszelle;

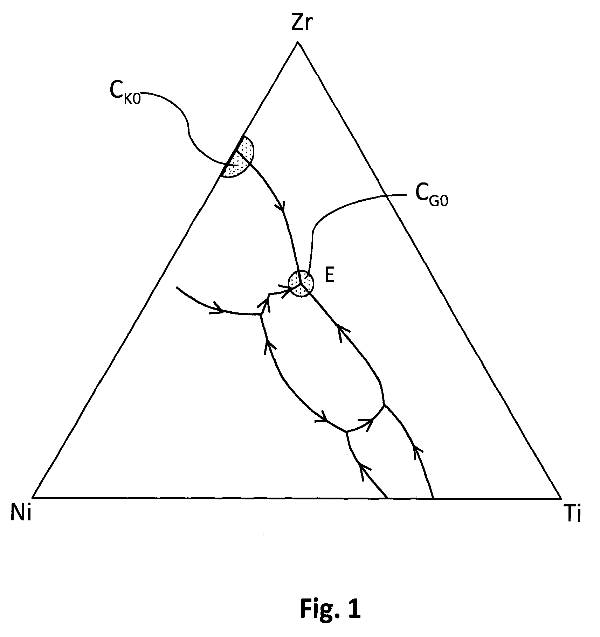

Das in Fig. 1 dargestellte Diagramm, für das ternäre Ni-Ti-Zr-System ist auf Daten von Gupta (Journal of Phase Equilibria, 20(4), Seiten 441 - 448, August 1999) gestützt. Es zeigt die Lage des eutektischen Punkts E
und einiger eutektischer Rinnen. Die Pfeile in den eutektischen Rinnen deuten jeweils in Richtung einer niedrigeren Liquidustemperatur.

Ausgehend von diesen Daten wird erfindungsgemäß ein Kernvolumen eines Aktivhartlots, das für die mechanischen Eigenschaften einer damit zu bildenden Fügestelle bestimmend ist, mit einer Komposition C_{K0} beispielsweise eines Lotformteils bereitgestellt, wobei die Oberflächen des Kernvolumens mit einer Grenzschicht einer Komposition C_{G0} beschichtet werden, wobei die letztgenannte Komposition einen deutlich tieferen Schmelzpunkt aufweist als die Komposition des Kernvolumens.

Insbesondere kann die Komposition C_{G0} der Grenzschicht am eutektischen Punkt oder nahe dem eutektischen Punkt gewählt sein, wie durch die entsprechend bezeichnete Fläche in Fig. 1 dargestellt ist. Eine geeignete Komposition C_{G0} umfasst beispielsweise 47 Atom-% Zr, 26 Atom-% Ni und 27 Atom-% Ti. Die zugehörige Liquidustemperatur beträgt etwa 770 °C.

Die Liquidustemperatur einer Komposition des Kernvolumens mit 76 Atom-% Zr und 24 Atom-% Ni beträgt dagegen etwa 960 °C.

Dem entsprechend kann die Grenzschicht beispielsweise bei einer Löttemperatur von 800 °C bis 850 °C zuverlässig aufgeschmolzen werden, ohne dass das Kernvolumen des Aktivhartlots aufgeschmolzen wird.

Damit kann die feinkristalline bzw. amorphe Struktur des Kernvolumens beim Löten erhalten werden. Lediglich an der Grenzfläche zwischen der Grenzschicht und dem Kernvolumen wird es ggf. zu einem Austausch zwischen dem Kernvolumen und der Grenzschicht kommen, so dass die Grenzschicht abschnittsweise einen Anstieg der Liquidustemperatur erfährt, was je nach der gewählten Löttemperatur bewirkt, dass Bereiche der Grenzschicht isotherm zäher werden oder erstarren. Jedenfalls wird aber die Struktur des Kernvolumens kaum verändert.

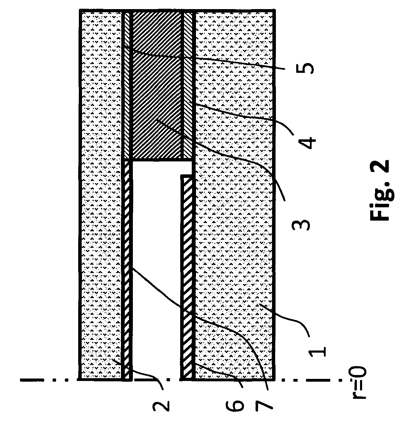

Nach dem geschilderten Prinzip werden nun die Komponenten einer Druckmesszelle gefügt, deren Anordnung vor dem Fügen in Fig. 2 dargestellt ist. Die Druckmesszelle umfasst einen keramischen Gegenkörper 1 und eine Messmembran 2, die Aluminiumoxid aufweisen. Die Messmembran 2 und der Gegenkörper sind mittels eines Aktivhartlots zu fügen, wobei das Aktivhartlot als ringförmiges Lotformteil 3 mit einer Stärke von beispielsweise 20 µm bereitgestellt wird, wobei auf beiden Stirnseiten des Lotrings eine Grenzschicht 4, 5 in einer Stärke von 1 µm bis 2 µm aufgesputtert ist.

Das Lotformteil weist die oben beschriebene Komposition C_{K0} Zdes Kernolumen auf, also Zr und Ni im stöchiometrischen Verhältnis von etwa 3 zu 1. Die Grenzschicht weist dagegen eine Komposition C_{G0} auf, die nahe am eutektischen Punkt E liegt.

Durch Löten im Hochvakuum bei beispielsweise 850°C reagieren die Grenzschichten 3, 4 mit dem Gegenkörper und der Messmembran 1, 2, so dass eine Fügestelle ausgebildet wird, wobei das Kernvolumen des Aktivhartlots nicht aufschmilzt und in seiner amorphen Struktur im Wesentlichen erhalten bleibt. Die Messmembran und der Grundkörper weisen weiterhin jeweils eine Elektrode 7, 6 eines kapazitiven Wandlers auf, wobei die Elektroden beispielsweise durch Abscheiden von Ni präpariert sein können.

## Patentansprüche

1. Baugruppe, umfassend:
einen ersten Keramikkörper (1) und einen zweiten Keramikkörper (2), wobei der erste Keramikkörper (1) und der zweite Keramikkörper (2) mittels einer Fügestelle verbunden sind, wobei die Fügestelle ein Aktivhartlot (5) aufweist,
wobei das Aktivhartlot, ein zusammenhängendes Kernvolumen aufweist, das von dem ersten Keramikkörper (1) und von dem zweiten Keramikkörper (2) jeweils mindestens 1 µm, insbesondere mindestens 2 µm beabstandet ist,
wobei der erste Keramikkörper (1) und / oder der zweite Keramikkörper (2) Al₂O₃ aufweisen,
wobei die Fügestelle eine erste Grenzschicht und eine zweite Grenzschicht aufweist, die an den ersten Keramikkörper bzw. zweiten Keramikkörper grenzen,
**dadurch gekennzeichnet, dass** das Kernvolumen, welches mindestens 50 % des Volumens der Fügestelle umfasst, frei von kristallinen Phasen mit einer Größe von mehr als 6 µm, insbesondere von mehr als 4 µm, vorzugsweise von mehr als 2 µm ist,
wobei das Aktivhartlot Zr, Ni und Ti aufweist,
wobei die mindestens eine Grenzschicht eine Stärke von nicht mehr als 3 µm, insbesondere nicht mehr als 2 µm und bevorzugt nicht mehr als 1 µm aufweist.

2. Baugruppe, nach Anspruch 1,
wobei das Aktivhartlot, gemittelt über das zusammenhängende Kernvolumen eine mittlere Komposition C_{K} mit einer Liquidustemperatur T_{I}(C_{K}) aufweist,
wobei C_{K} := (C_{K1}, ... ,C_{KN}), wobei |C_{K}| = 1, und wobei die C_{Ki} die stöchiometrischen Anteil der Komponenten K_{I} i = 1, ..., N der mittleren Komposition des Aktivhartlots im Kernvolumen sind,
wobei mindestens eine der Grenzschichten, die außerhalb des Kernvolumens liegt, eine mittlere Komposition C_{G} mit einer Liquidustemperatur T_{I}(C_{G}) aufweist, die nicht weniger als 20 K, vorzugsweise nicht weniger als 40 K, und besonders bevorzugt nicht weniger als 80 K unter der Liquidustemperatur T_{I}(C_{K}) der mittleren Komposition C_{K} des Kernvolumens liegt,
wobei C_{G} := (C_{G1}, ... ,C_{GN}), wobei |C_{G}| = 1, und wobei die C_{Gi} die stöchiometrischen Anteile der Komponenten Kᵢ i = 1, ..., N der mittleren Komposition des Aktivhartlots in der Grenzschicht sind.

3. Baugruppe nach Anspruch 1 oder 2, wobei die Fügestelle ringförmig ausgebildet ist, und
wobei das Kernvolumen durch einen Rotationskörper definiert ist, der durch Rotation eines konvexen Polygons, insbesondere Rechtecks, um die Hauptrotationsachse des Rings gebildet ist.

4. Baugruppe nach einem der vorhergehenden Ansprüche, wobei die Liquidustemperatur von T_{I}(C_{G}) zur Liquidustemperatur T_{I}(C_{K}) monoton mit der Veränderung der Komposition von C_{G} zu C_{K} ansteigt.

5. Baugruppe nach einem der vorherigen Ansprüche, wobei die Komposition C_{G} eine Liquidustemperatur T_{I}(C_{G}) aufweist, die nicht mehr als 300 K, vorzugsweise nicht mehr als 150 K, und bevorzugt nicht mehr als 50 K oberhalb der Liquidustemperatur T_{I}(Cₑ) des eutektischen Punktes bzw. des nächsten Schnittpunkts mit einer eutektischen Rinne mit einer Komposition Cₑ im Kompositionsraum liegt,
wobei Cₑ := (Cₑ₁, ... ,C_{eN}), wobei |Cₑ| = 1, und wobei die cₑᵢ der stöchiometrische Anteil der Komponenten Kᵢ mit i = 1, ..., N am eutektischen Punkt bzw. ein nächster Schnittpunkt mit einer eutektischen Rinne ist.

6. Baugruppe nach einem der vorhergehenden Ansprüche, wobei die Legierung der Fügestelle am eutektischen Punkt bzw. am nächsten Schnittpunkt mit einer eutektischen Rinne im Kompositionsraum eine Komposition Cₑ aufweist,
wobei Cₑ := (cₑ₁, ... ,c_{eN}), wobei |Cₑ| = 1, wobei die cₑᵢ die stöchiometrischen Anteile der Komponenten Kᵢ mit i = 1, ..., N am eutektischen Punkt bzw. am nächsten Schnittpunkt mit einer eutektischen Rinne sind,
wobei die Differenz zwischen der Komposition Cₑ und der Komposition C_{G} mit einem normierten Differenzvektor D_{eG} beschreibbar ist,
wobei gilt: Cₑ = C_{G} + a_{eG} * D_{eG}, mit |D_{eG}|=1,
wobei die Differenz zwischen der Komposition C_{K} und der Komposition C_{G} mit einem normierten Differenzvektor D_{KG} beschreibbar ist,
wobei gilt: C_{K} = C_{G} + a_{KG} * D_{KG}, mit |D_{KG}|=1,
wobei a_{eG} und a_{KG} positive Skalare sind,
wobei für das Skalarprodukt s_{eK} : = D_{eG} · DKG gilt:
S_{eK} < 0, insbesondere S_{eK} < -0,5, bevorzugt S_{eK} < - 0,8.

7. Baugruppe nach einem der vorhergehenden Ansprüche, wobei die Komposition C_{K} des Kernvolumens Metalle aufweist, welche auch die Komposition C_{G} der Grenzschicht enthält.

8. Baugruppe nach dem vorhergehenden Anspruch, wobei die Komposition C_{K}, im wesentlichen Zirkonium und Nickel enthält, beispielsweise in einem stöchiometrischen Verhältnis von etwa 3 zu 1, wobei der Zirkoniumanteil beispielsweise 76 Atom-% und der Nickelanteil beispielsweise 24 Atom-% beträgt.

9. Baugruppe nach einem der vorhergehenden Ansprüche, wobei die Grenzschicht eine Komposition C_{G} aufweist, die etwa 42 bis 52 Atom-% Zr, 23 bis 28 Atom-% Ni und 24 bis 30 Atom-% Ti aufweist, wobei ggf. Al eindiffundiert ist ,wobei in dem Maße, wie Al vorliegt, insbesondere der Titananteil reduziert ist.

10. Baugruppe nach einem der vorhergehenden Ansprüche, wobei beide Grenzschichten der Fügestelle die Komposition C_{G} aufweisen.

11. Druckmesszelle, umfassend eine Baugruppe nach einem der vorhergehenden Ansprüche,
wobei der erste Keramikkörper einen Membrankörper einer Messmembran der Druckmesszelle bildet,
wobei der zweite Keramikkörper einen Gegenkörper der Druckmesszelle bildet, und wobei der Gegenkörper und der Messmembran mittels der Fügestelle, welche ringförmig ausgebildet ist, druckdicht miteinander gefügt sind.

12. Verfahren zum Herstellen einer Baugruppe nach einem der vorhergehenden Ansprüche,
wobei das Verfahren die folgenden Schritte umfasst:
Bereitstellen des Aktivhartlots zwischen den Keramikkörpern, wobei das Aktivhartlot gemittelt über ein zusammenhängendes Kernvolumen eine mittlere Komposition C_{K0} mit einer Liquidustemperatur T_{I}(C_{K0}) aufweist, wobei C_{K0} := (C_{K01}, ... ,C_{K0N}), wobei |C_{K0}| = 1, und wobei die C_{Ki} die stöchiometrischen Anteile der Komponenten Kᵢ i = 1, ..., N der mittleren Komposition des Aktivhartlots im Kernvolumen sind, wobei
das Aktivhartlot auf zumindest einer der Oberflächen, die dem Keramikkörper zugewandt sind, eine Grenzschicht mit einer mittleren Komposition C_{G0} aufweist, wobei die Komposition C_{G0} eine Liquidustemperatur T_{I}(C_{G0}) aufweist, die nicht weniger als 20 K, vorzugsweise nicht weniger als 40 K, und besonders bevorzugt nicht weniger als 80 K unter der Liquidustemperatur T_{I}(C_{H0}) der mittleren Komposition C_{K0} des Hauptvolumens liegt, wobei C_{G0} := (c_{G01}, ... ,c_{G0N}), wobei |C_{G0}| = 1, und wobei die c_{G0i} die stöchiometrischen Anteile der Komponenten Kᵢ i = 1, ..., N der mittleren Komposition des Aktivhartlots in der Grenzschicht sind, und
Erhitzen der Keramikkörper und des Aktivhartlots in einem Vakuumlötprozess bis zum Schmelzen der Komposition C_{G0}, wobei die Schmelze der Grenzschicht sich im Übergang zum Kernbereich mit dem Material der Grenzschicht vermischt, wodurch die Liquidustemperatur der Grenzschicht erhöht wird, so dass die Grenzschicht zumindest teilweise isotherm erstarrt oder höherviskos wird.

13. Verfahren nach Anspruch 12, wobei das Bereitstellen des Aktivhartlots umfasst, dass ein Lotformteil, welches die Komposition C_{K0} aufweist, mittels Gasphasenabscheidung, beispielsweise durch Sputtern, mindestens auf einer Oberfläche, vorzugsweise auf zwei gegenüberliegenden Oberflächen mit einer Grenzschicht beschichtet wird, welche die Komposition C_{G0} aufweist.

14. Verfahren nach Anspruch 12 oder 13, wobei das Bereitstellen des Aktivhartlots umfasst, dass mindestens ein Oberflächenabschnitt eines Keramikkörpers, insbesondere zwei gegenüberliegenden Oberflächenabschnitte der beiden Keramikkörper mit einer Grenzschicht beschichtet wird bzw. werden, welche die Komposition C_{G0} aufweist, wobei die Beschichtung beispielsweise durch Gasphasenabscheidung, insbesondere Sputtern erfolgt.

15. Verfahren nach Anspruch 14, wobei zwischen den mit der Grenzschicht versehenen Keramikkörper ein Lotformteil angeordnet wird, welches ein Kernvolumen mit der Komposition C_{K0} aufweist, und welches ggf. mit einer Grenzschicht der Komposition C_{G0} beschichtet ist.

16. Verfahren nach einem der Ansprüche 12 bis 16, wobei die Komposition C_{G0} etwa 42 bis 52 Atom-% Zr, 23 bis 28 Atom-% Ni und 24 bis 30 Atom-% Ti aufweist, beispielsweise 45 bis 49 Atom-% Zr, 24,5 bis 27 Atom-% Ni und 26 bis 29,5 Atom-% Ti, und vorzugsweise 47 Atom-% Zr, 26 Atom-% Ni und 27 Atom-% Ti.

## Claims

1. Assembly, comprising:
a first ceramic body (1) and a second ceramic body (2), wherein the first ceramic body (1) and the second ceramic body (2) are connected via a joint, wherein the joint features an active brazing solder (5),
wherein the active brazing solder has a continuous core volume, which is at a distance, in each case, of at least 1 µm, particularly at least 2 µm, from the first ceramic body (1) and the second ceramic body (2),
wherein the first ceramic body (1) and/or the second ceramic body (2) feature Al₂O₃,
wherein the joint has a first boundary layer and a second boundary layer, which are adjacent to the first ceramic body or the second ceramic body respectively,
**characterized in that** the core volume, which comprises at least 50% of the volume of the joint, is free from crystalline phases with a size of more than 6 µm, notably of more than 4 µm and preferably of more than 2 µm,
wherein the active brazing solder contains Zr, Ni and Ti,
wherein the at least one boundary layer has a thickness of not more than 3 µm, notably not more than 2 µm and preferably not more than 1 µm.

2. Assembly as claimed in Claim 1, wherein the active brazing solder, averaged over the continuous core volume, has an average composition C_{K} with a liquidus temperature T_{I}(C_{K}), where C_{K:} = (C_{K1}, ..., C_{KN}), C_{K}| being equal to 1 and C_{Ki} representing the stoichiometric part of the components Kᵢ i = 1, ..., N of the average composition of the active brazing solder in the core volume,
wherein at least one of the boundary layers, which is outside the core volume, has an average composition C_{G} with a liquidus temperature T_{I}(C_{G}) which is not less than 20 K, preferably not less than 40 K and particularly preferably not less than 80 K below the liquidus temperature T_{I}(C_{G}) of the average composition C_{K} of the core volume,
where C_{G:} = (C_{G1}, ..., C_{GN}), |C_{G}| being equal to 1 and C_{Gi} representing the stoichiometric parts of the components Kᵢ i = 1, ..., N of the average composition of the active brazing solder in the boundary layer.

3. Assembly as claimed in Claim 1 or 2, wherein the joint has an annular shape, and
wherein the core volume is defined by a rotation body, which is formed by the rotation of a convex polygon, notably a rectangle, around the main axis of rotation of the ring.

4. Assembly as claimed in one of the previous claims, wherein the liquidus temperature of T_{I}(C_{G}) in relation to the liquidus temperature T_{I}(C_{K}) increases in a monotonic manner with the change in the composition from C_{G} to C_{K}.

5. Assembly as claimed in one of the previous claims, wherein the composition C_{G} has a liquidus temperature T_{I}(C_{G}) which is not more than 300 K, preferably not more than 150 K and particularly preferably not more than 50 K above the liquidus temperature T_{I}(Cₑ) of the eutectic point or the next point of intersection with a eutectic channel with a composition Cₑ in the composition zone,
where Cₑ : = (Cₑ₁, ... , C_{eN}), |Cₑ| being equal to 1 and Cₑᵢ representing the stoichiometric part of the components Kᵢ i = 1, ..., N at the eutectic point or a next point of intersection with a eutectic channel.

6. Assembly as claimed in one of the previous claims, wherein the alloy of the joint at the eutectic point or at the next point of intersection with a eutectic channel has a composition Cₑ in the composition zone,
where Cₑ := (Cₑ₁, ..., C_{eN}), |Cₑ| being equal to 1 and Cₑᵢ representing the stoichiometric parts of the components Kᵢ i = 1, ..., N at the eutectic point or at the next point of intersection with a eutectic channel,
wherein the difference between the composition Cₑ and the composition C_{G} can be described with a normalized differential vector D_{eG},
wherein it is established that: Cₑ = C_{G} + a_{eG} * D_{eG}, with |D_{eG}| = 1,
wherein the difference between the composition C_{K} and the composition C_{G} can be described with a normalized differential vector D_{KG},
wherein it is established that: C_{K} = C_{G} + a_{KG} * D_{KG}, with |D_{KG}| = 1,
wherein a_{eG} et a_{KG} are positive scalars,
wherein for the scalar product s_{eK :} = D_{eG} * D_{GK} the following applies:
s_{eK} < 0, particularly s_{eK} < -0.5, preferably s_{eK} < -0.8.

7. Assembly as claimed in one of the previous claims, wherein the composition C_{K} of the core volume contains metals, which the composition C_{G} of the boundary layer also contains.

8. Assembly as claimed in one of the previous claims, wherein the composition C_{K} essentially contains zirconium and nickel, for example in a stoichiometric ratio of around 3:1, wherein the zirconium part is, for example, 76 at. % and the nickel part is, for example, 24 at %.

9. Assembly as claimed in one of the previous claims, wherein the boundary layer has a composition C_{G} which constitutes around 42 to 52 at. % of Zr, 23 to 28 at. % of Ni and 24 to 30 at. % of Ti, wherein there may be diffusion of aluminum, wherein the share of titanium, in particular, is reduced according to the presence of the aluminum.

10. Assembly as claimed in one of the previous claims, wherein both boundary layers of the joint have the composition C_{G}.

11. Pressure measuring cell, comprising an assembly as claimed in one of the previous claims,
wherein the first ceramic body forms a membrane body of a measuring membrane of the pressure measuring cell,
wherein the second ceramic body forms a counter-body of the pressure measuring cell, and
wherein the counter-body and the measuring membrane are joined in a pressure-tight manner with one another by means of the joint that has an annular design.

12. Procedure designed for the production of an assembly as claimed in one of the previous claims,
wherein the procedure comprises the following steps:
Provision of the active brazing solder between the ceramic bodies, wherein the active brazing solder, averaged over a continuous core volume, has an average composition C_{K0} with a liquidus temperature T_{I}(C_{K0}), where C_{K0} := (C_{K01}, ..., C_{K0N}), |C_{K0}| being equal to 1 and C_{Ki} representing the stoichiometric parts of the components Kᵢ i = 1, ..., N of the average composition of the active brazing solder in the core volume, wherein
the active brazing solder has, at least on one of the surfaces which faces towards the ceramic body, a boundary layer with an average composition C_{G0}, wherein the composition C_{G0} has a liquidus temperature T_{I}(C_{G0}) that is not less than 20 K, preferably not less than 40 K and particularly preferably not less than 80K below the liquidus temperature T_{I}(C_{H0}) of the average composition C_{K0} of the main volume, where C_{G0} := (C_{G01}, ..., C_{G0N}), |C_{G0}| being equal to 1 and C_{G0i} representing the stoichiometric parts of the components Kᵢ i = 1, ..., N of the average composition of the active brazing solder in the boundary layer, and
Heating of the ceramic bodies and of the active brazing solder in a vacuum solder process until the composition C_{G0} melts, wherein the molten mass of the boundary layer mixes with the material of the boundary layer at transition to the core area, as a result of which the liquidus temperature of the boundary layer is increased such that the boundary layer solidifies in an isothermal manner at least partially, or becomes more viscous.

13. Procedure as claimed in Claim 12, wherein the provision of active brazing solder comprises the coating of a solder preform which has the composition C_{K0}, with a boundary layer, which has the composition C_{G0}, on at least one surface, preferably on two opposing surfaces, by means of vapor deposition, such as via sputtering.

14. Procedure as claimed in Claim 12 or 13, wherein the provision of active brazing solder comprises the coating of at least one surface section of a ceramic body, particularly two opposing surface sections of the two ceramic bodies, with a boundary layer which has the composition C_{G0}, wherein the coating is performed, for example, via vapor deposition, particularly sputtering.

15. Procedure as claimed in Claim 14, wherein a solder preform is arranged between the ceramic bodies provided with the boundary layer, said preform having a core volume with the composition C_{K0}, and which may be coated with a boundary layer of the composition C_{G0}.

16. Procedure as claimed in one of the Claims 12 to 15, wherein the composition C_{G0} constitutes around 42 to 52 at. % of Zr, 23 to 28 at. % of Ni and 24 to 30 at. % of Ti, for example 45 to 49 at. % of Zr, 24.5 to 27 at. % of Ni and 26 to 29.5 at. % of Ti and preferably 47 at. % of Zr, 26 at. % of Ni and 27 at. % of Ti.

## Revendications

1. Ensemble, comprenant :
un premier corps en céramique (1) et un deuxième corps en céramique (2), le premier corps en céramique (1) et le deuxième corps en céramique (2) étant reliés au moyen d'un joint, le joint comprenant un métal d'apport de brasage fort (5),
pour lequel le métal d'apport de brasage fort présente un volume de noyau cohérent, qui se trouve à une distance d'au moins 1 µm, notamment d'au moins 2 µm, du premier corps en céramique (1) et du deuxième corps en céramique (2),
pour lequel le premier corps en céramique (1) et/ou le deuxième corps en céramique (2) comportent de l'Al₂O₃,
pour lequel le joint comporte une première interface et une deuxième interface, qui sont adjacentes au premier corps en céramique ou au deuxième corps en céramique,
**caractérisé en ce que** le volume du noyau, qui comprend au minimum 50 % du volume du joint, est exempt de phases cristallines d'une taille de plus de 6 µm, notamment de plus de 4 µm et de préférence de plus de 2 µm,
pour lequel le métal d'apport de brasage fort contient du Zr, du Ni et du Ti,
pour lequel l'au moins une interface présente une épaisseur de moins de 3 µm, notamment de moins de 2 µm et de préférence de moins de 1 µm.

2. Ensemble selon la revendication 1, pour lequel le métal d'apport de brasage fort, moyenne sur le volume de noyau cohérent, présente une composition C_{K} moyenne avec une température de liquidus Tₗ(C_{K}),
avec C_{K} = (C_{K1}, .... C_{KN}), |C_{K}| étant égal à 1 et C_{Ki} représentant la part stoechiométrique des composants Kᵢ i = 1, ..., N de la composition moyenne du métal d'apport de brasage fort au sein du volume de noyau,
pour lequel au moins l'une des interfaces, qui se situe en dehors du volume de noyau, présente une composition moyenne C_{G} avec une température de liquidus T_{I}(C_{G}) qui n'est pas inférieure de 20 K, de préférence pas inférieure de 40 K et particulièrement de préférence pas inférieure de 80 K à la température du liquidus T_{I}(C_{G}) de la composition moyenne C_{K} du volume de noyau,
avec C_{G} = (C_{G1}, .... C_{GN}), |C_{G}| étant égal à 1 et C_{Gi} représentant la part stoechiométrique des composants Kᵢ i = 1, ..., N de la composition moyenne du métal d'apport de brasage fort au sein de l'interface.

3. Ensemble selon la revendication 1 ou 2, pour lequel le joint est de forme annulaire, et pour lequel le volume de noyau est défini par un corps de rotation qui est formé par un polygone convexe, notamment un rectangle, autour de l'axe de rotation principal de l'anneau.

4. Ensemble selon l'une des revendications précédentes, pour lequel la température de liquidus croît de façon monotone de Tₗ(C_{G}) vers la température de liquidus T_{I}(C_{K}) avec la modification de la composition de C_{G} vers C_{K}.

5. Ensemble selon l'une des revendications précédentes, pour lequel la composition C_{G} présente une température de liquidus T_{I}(C_{G}) qui n'est pas supérieure de 300 K, de préférence pas supérieure de 150 K et particulièrement de préférence pas supérieure de 50 K à la température de liquidus Tₗ(Cₑ) du point eutectique ou du prochain point d'intersection avec un canal eutectique de composition Ce au sein de la zone de composition,
avec Ce = (Cₑ₁, ..., C_{eN}), |Cₑ| étant égal à 1 et Cₑᵢ représentant la part stoechiométrique des composants Kᵢ i = 1, ..., N au point eutectique ou à un prochain point d'intersection avec un canal eutectique.

6. Ensemble selon l'une des revendications précédentes, pour lequel l'alliage du joint au point eutectique ou au prochain point d'intersection avec un canal eutectique présente une composition Ce dans la zone de composition,
avec Ce = (Cₑ₁, ..., C_{eN}), |Cₑ| étant égal à 1 et Cₑᵢ représentant la part stoechiométrique des composants Kᵢ i = 1, ..., N au point eutectique ou au prochain point d'intersection avec un canal eutectique,
pour lequel la différence entre la composition Ce et la composition C_{G} peut être décrite avec un vecteur de différence D_{eG} normalisé,
étant établi que : Ce = C_{G} + a_{eG} * D_{eG}, avec |D_{eG}| = 1,
pour lequel la différence entre la composition C_{K} et la composition C_{G} peut être décrite avec un vecteur de différence D_{KG} normalisé,
étant établi que : C_{K} = C_{G} + a_{KG} * D_{KG}, avec |D_{KG}| = 1,
a_{eG} et a_{KG} étant des scalaires positifs,
la relation s_{eK} = D_{eG} * D_{GK} étant établie pour le produit scalaire,
s_{eK} < 0, notamment s_{eK} < -0,5, de préférence s_{eK} < -0,8.

7. Ensemble selon l'une des revendications précédentes, pour lequel la composition C_{K} du volume de noyau contient des métaux, que contient également la composition C_{G} de l'interface.

8. Ensemble selon la revendication précédente, pour lequel la composition C_{K} contient pour l'essentiel du zirconium et du nickel, par exemple selon un rapport stoechiométrique d'env. 3:1, la teneur en zirconium s'élevant par exemple à 76 % at et la teneur en nickel par exemple à 24 % at.

9. Ensemble selon l'une des revendications précédentes, pour lequel l'interface présente une composition C_{G} qui est constituée d'env. 42 à 52 % at de Zr, de 23 à 28 % at de Ni et de 24 à 30 % at de Ti, celle-ci étant éventuellement enrichie à l'aluminium, la teneur en titane étant notamment réduite selon la présence d'aluminium.

10. Ensemble selon l'une des revendications précédentes, pour lequel les deux interfaces du joint présentent la composition C_{G}.

11. Cellule de mesure de pression, comprenant un ensemble selon l'une des revendications précédentes,
pour laquelle le premier corps en céramique forme un corps d'une membrane de mesure de la cellule de mesure de pression,
pour lequel le deuxième corps en céramique forme un contre-corps de la cellule de mesure de pression, et
pour lequel le contre-corps et la membrane de mesure sont assemblés de façon étanche à la pression au moyen du joint, lequel est de forme annulaire.

12. Procédé destiné à la fabrication d'un ensemble selon l'une des revendications précédentes,
lequel procédé comprend les étape suivantes :
Mise à disposition du métal d'apport de brasage fort entre les corps en céramique, le métal d'apport de brasage fort, moyenne sur le volume de noyau cohérent, présentant une composition C_{K0} moyenne avec une température de liquidus T_{I}(C_{K0}), avec C_{K0} = (C_{K01}, ..., C_{K0N}), |C_{K0}| étant égal à 1 et C_{Ki} représentant les parts stoechiométriques des composants Kᵢ i = 1, ..., N de la composition moyenne du métal d'apport de brasage fort au sein du volume de noyau,
la brasure présentant sur au moins l'une des surfaces, qui fait face au corps en céramique, une interface avec une composition moyenne C_{G0}, la composition C_{G0} présentant une température de liquidus Tₗ(C_{G0}) qui n'est pas inférieure de 20 K, de préférence pas inférieure de 40 K et particulièrement de préférence pas inférieure de 80 K à la température de liquidus Tₗ(C_{H0}) de la composition moyenne C_{K0} du volume principal, avec C_{G0} = (C_{G01}, ..., C_{G0N}), |C_{G0}| étant égal à 1 et C_{G0i} représentant les parts stoechiométriques des composants Kᵢ i = 1, ..., N de la composition moyenne du métal d'apport de brasage fort au sein de l'interface, et
Échauffement des corps en céramique et du métal d'apport de brasage fort dans un process de brasage sous vide jusqu'à l'entrée en fusion de la composition C_{G0}, la masse fondue de l'interface se mélangeant avec la matière de l'interface au niveau de la transition avec la zone du noyau, entraînant l'augmentation de la température de liquidus de l'interface, si bien que l'interface se solidifie de manière isotherme au moins partiellement, ou devient plus visqueuse.

13. Procédé selon la revendication 12, pour lequel la mise à disposition du métal d'apport de brasage fort comprend le revêtement d'un préformé de brasage qui présente la composition C_{K0}, au moyen d'un dépôt chimique en phase vapeur, par exemple par pulvérisation cathodique, au moins sur une surface, de préférence sur deux surfaces opposées, avec une interface qui présente la composition C_{G0}.

14. Procédé selon la revendication 12 ou 13, pour lequel la mise à disposition du métal d'apport de brasage fort comprend le revêtement d'au moins une portion de surface d'un corps en céramique, notamment deux portions de surface opposées des deux corps en céramique, avec une interface qui présente la composition C_{G0}, le revêtement étant par exemple effectué par un dépôt chimique en phase vapeur, notamment par pulvérisation cathodique.

15. Procédé selon la revendication 14, pour lequel est disposé, entre les corps en céramique munis de l'interface, un préformé de brasage qui présente un volume de noyau avec la composition C_{K0}, et lequel est le cas échéant revêtu avec l'interface de la composition C_{G0}.

16. Procédé selon l'une des revendications 12 à 15, pour lequel la composition C_{G0} est constituée d'env. 42 à 52 % at de Zr, 23 à 28 % at de Ni et 24 à 30 % at de Ti, par exemple de 45 à 49 % at de Zr, 24,5 à 27 % at de Ni et 26 à 29,5 % at de Ti et de préférence de 47 % at de Zr, 26 % at de Ni et 27 % at de Ti.
